# EUROPEAN PATENT APPLICATION

(11) **EP 4 800 305 A1**
(43) Date of publication of application: **02.09.2026**
(21) Application number: 25160403.9
(22) Date of filing: 26.02.2025
(51) Int. Cl.: F24D 3/10, F16K 11/085, F16K 11/087, F24D 19/10, F24H 15/305

(54) **TEMPERING CIRCUIT MANIFOLD AND TEMPERING SYSTEM HEREWITH**

(71) Applicant: Danfoss A/S, 6430 Nordborg (DK)
(72) Inventor: Andersen, Mads, Nordborg (DK); Franck, Martin, Nordborg (DK); Clausen, Anders Østergaard, Nordborg (DK)
(74) Representative: Patentanwälte Olbricht Buchhold Keulertz

(57) **Abstract**

The invention refers to a Tempering circuit manifold for a building tempering system comprising a control manifold (10) with a liquid main opening (11) which empties into a distribution channel (12) having at least two separate liquid distribution openings (13, 14, 15, 16, 17, 18), wherein the liquid distribution openings (13, 14, 15, 16, 17, 18) are designed in particular to feed different tempering loop pipes (C1, C2, C3, C4), and a valve device (20) having a single valve motor (21) that drives a valve assembly (22) designed to control the flow rate through at least two of the liquid distribution openings (13, 14, 15, 16, 17, 18) being controlled liquid distribution openings (13, 14, 15, 16, 17, 18).

## Description

The invention relates to a tempering circuit manifold according to claim 1 and a tempering system herewith according to claim 18.

Known tempering systems, in particular heating systems as for example disclosed by EP 2 399 078 B1 comprise a heating liquid heater, a liquid pump and a heating circuit manifold to distribute the heated heating liquid to different heating loop pipes. Within buildings, such heating loop pipes are arranged within a plurality of rooms, whereas one room may have more than one heating loop pipe. A heater outlet of the heating liquid heater empties into a liquid main opening of a supply manifold, and a liquid outlet of a complementary manifold empties into a heater inlet of the heating liquid heater. Typically, the supply manifold has two to eight separate liquid distribution openings, each connected to one heating loop pipe, and the heating loop pipes empty into a liquid distribution opening of a complementary manifold. Each of the heating loop pipes has a valve with a separate motor to control the flow rate through the heating loop pipes. The valves are typically positioned at the complementary manifold but may also be positioned at the supply manifold making this manifold a control manifold. The valves open and close based on data of a thermostat that is arranged somewhere in the environment of the related heating loop pipe. Typically, the thermostat switches the valve between an open and closed state only. Such tempering systems may not only be used for heating but also for cooling appliances. Therefore, the more general term tempering will be used to refer to both of heating and cooling. The tempering devices will be called a temperer to cover both heaters and coolers.

The downside of this technology is that a high number of separate motors with separate energy consumption is needed, which in addition asks for considerable space at the control manifold and comprehensive wiring. Furthermore, the independent flow control of the separate tempering loop pipes causes hydraulic imbalance such that some of the opened tempering loop pipes may not receive the needed volume of heating fluid whereas other opened tempering loop pipes may receive too much heating fluid. Switching the flow rate of one tempering loop pipe may cause unexpected reactions in others of the opened tempering loop pipes. Resulting temporary overheating of tempering loop pipes in such circumstances increases the energy consumption and heating costs. The outbalancing of the hydraulic imbalance requires knowledge, efforts and time, and may in some jurisdictions even be required on a regular basis by law causing regular servicing costs.

Object of the invention is to provide solutions related to a tempering circuit manifold, in particular a heating circuit manifold or cooling circuit manifold, to reduce material, installation and servicing costs, to avoid energy losses, to reduce energy consumption and to allow a precise tempering, in particular heating or cooling, by a plurality of tempering loop pipes.

Main features according to the invention are given in claim 1 and claim 18. Embodiments are the subject of claims 2 to 17 and of the specification.

The invention relates to a tempering circuit manifold for a building tempering system that comprises a control manifold with a liquid main opening which empties into a distribution channel having at least two separate liquid distribution openings, wherein the liquid distribution openings are designed in particular to be connected to different tempering loop pipes. Advantageously, the tempering circuit manifold comprises a valve device having a single valve motor that drives a valve assembly designed to control the flow rate through at least two of the liquid distribution openings being controlled liquid distribution openings.

The advantage of the inventive tempering circuit manifold is that material costs, installation costs, commissioning costs and space requirements are low, as only one valve motor, in particular an electric motor, is required for the controlled liquid distribution openings. There is no need to balance the hydraulics of the tempering loop pipes based on independent motors working in a confused manner and feeding tempering loop pipes with different differential pressure (e.g. caused by different pipe length), and heat losses are low. Balancing is not required either on initial installation or on a regular basis. It has been found that in most installations and situations it is sufficient to supply the individual loop pipes with tempered fluid at individual intervals. In this way, the one valve motor is able to control multiple fluid outlets via the inventive driven valve assembly. The individual tempering request can be fulfilled by switching between the controlled liquid distribution openings. In particular, the valve assembly should be designed to open the controlled liquid distribution openings separately and/or to open the controlled liquid distribution openings by a selection out of a fixed number of potential opening states relatively to each other. It is preferred, that the control manifold has two to ten separate liquid distribution openings.

Tempering means that the fluid has a temperature to temper a receiver, typically a room, where the temperature may be higher or lower than the temperature of the receiver. However, positive heating is the typical main function and cooling by low temperatures is often just an additional function in typical cases.

The control manifold can be used as a collecting manifold or as a supply manifold, or in other words with forward or reverse flow, so terminology referring to the direction of flow is not restricted to its literal meaning, although the direction of flow is preferred such that the control manifold works as a collecting manifold at the flow end of the tempering loop pipes.

Pipes should be understood to cover tubes, ducts, connectors and all other kind of elements comprising hollow liquid channels.

Optionally, the valve assembly comprises a control shaft with a shaft axis driven by the single valve motor about the shaft axis, wherein the control shaft comprises control features, wherein at least one control feature is assigned to each of the controlled liquid distribution openings and designed to open the assigned controlled liquid distribution opening in dependence of a certain opening angle between 0 and 360 degrees of the control shaft about the shaft axis. Such a control shaft allows a small number of moving parts and mechanics to control the plurality of controlled liquid distribution openings and at the same time allows different preset control states to be defined that can be selected by the valve motor by turning the control shaft to a defined angle. Preferably, the drive shaft is designed such that the opening and closed states of the liquid distribution openings repeat at each turn of the control shaft about the shaft axis. The control features should be fixed to or being a fixed part of the control shaft. Each control feature should only interact with one of the controlled liquid distribution openings (but not with the other ones). The control shaft should not be a spindle shaft that moves an actuator back and forth between the controlled liquid distribution openings.

According to a specific design, the shaft axis can extend along the control manifold so as to be rotatable about the shaft axis, wherein the controlled liquid distribution openings being arranged along the shaft axis. This allows direct control by the shaft axis, which can be located close to all controlled liquid distribution openings.

Preferably, the control features are (or a set of the control features is) arranged at offset angles about the shaft axis, preferably uniformly distributed, e.g. along a spiral path about the shaft axis. This allows an easy opening of the controlled liquid distribution openings one by one.

In a variant of the tempering circuit manifold, the control shaft builds a single closure element that selectively locks or opens the liquid flow through the controlled liquid distribution openings in dependence of a specific opening angle between 0 and 360 degrees of the control shaft about the shaft axis.

In a more specific variant of the tempering circuit manifold, the control shaft is hollow and has a tube wall that extends along the shaft axis, wherein the hollow control shaft is mounted within the distribution channel, wherein the liquid main opening empties into the hollow control shaft, wherein the controlled liquid distribution openings being arranged on the circumference of the tube wall, wherein the control features are built by valve openings that are formed in the tube wall that correspond with the controlled liquid distribution openings in dependence of a specific opening angle between 0 and 360 degree of the control shaft about the shaft axis, in particular by an overlap of the valve opening and the corresponding controlled liquid outlet.

In both of the aforesaid variants, that can also be combined, the control shaft is at least partially positioned in a wet position of the tempering liquid circuit. A rather direct opening of the controlled liquid distribution openings is achieved. The controlled liquid distribution openings preferably do not comprise further moving parts for allowing and blocking liquid flow. This is cheap and durable.

In another variant of the tempering circuit manifold, the control shaft has an outer surface that extends along the shaft axis, wherein the control shaft is mounted inside or outside along the distribution channel, wherein the controlled liquid distribution openings each comprise a valve element which rests in a valve seat, wherein the outer surface forms the control features in such a way that the valve elements are mechanically linked to the outer surface of the control shaft and are moved into an opening position in the valve seat in dependence of a specific opening angle of the control shaft between 0 and 360 degrees about the shaft axis, in particular by linear movement of the valve element in the valve seat. Such embodiments allow a reliable full closure of the controlled liquid distribution openings by known valve element and valve seat designs, and as such avoids leakages into tempering loops without tempering request. A mounting inside the distribution channel results in a wet position of the control shaft, whereas the number of potential leakage points to the environment is low. A position outside of the distribution channel allows a visual control of the mechanic and eases proper installation and function control.

In particular, the outer surface may build circumferential control curves for each of the valve elements. This allows a smooth mechanic and in addition may be used to partially opening the controlled liquid distribution openings.

According to a specific design, the outer surface may comprise a cylindrical base shape and the control features are local holes and/or local peaks at the cylindrical base shape. This allows a simple design and manufacturing of the control shaft including the control features. The control features, in particular the local peaks, might be manufactured separately and mounted to the cylindrical base shape. However, a one-piece design of the control shaft is preferred.

Specifically, the local peaks can have an arc shape, that preferably has a smaller radius than the cylindrical base shape.

A further optional feature is that each of the valve elements can be urged into the direction of a locking state in its valve seat by a spring and the control shaft acts against the spring. The linkage between the control shaft and the valve element can therefore be designed simple as control forces are only necessary in one acting direction. Contact between the control shaft and the valve elements can further be reduced to the opening state. This reduces friction and allows to use a less strong valve motor.

In a specific embodiment, when the control shaft is mounted within the distribution channel, the liquid main opening empties into an annular space around the control shaft in the distribution channel, and the controlled liquid distribution openings are arranged at the circumference of the annular space. The tempering liquid therefore easily reaches the controlled liquid distribution openings without a more complex distribution shape of the distribution channel or the control shaft.

Preferably, the controlled liquid distribution openings or all of the liquid distribution openings are arranged in a common layer, in particular in a row and/or parallel to each other. This allows a compact installation of the control manifold as all tempering loop pipes may approach in one layer, too.

Optionally, the valve assembly is designed to control the flow rate through all of the liquid distribution openings of the control manifold, in particular such that all of the liquid distribution openings are controlled liquid distribution openings. This matches the typical installation with all tempering loop pipes being of the same tempering type, e.g. a floor heating or wall heating pipe. If e.g. a separate radiator with a separate mechanical thermostat is to be connected to the control manifold, this could be done by a non-controlled liquid outlet of the control manifold. To reach flexibility, the control manifold may have a design to change a liquid outlet between being a controlled liquid outlet and being a non-controlled liquid outlet. Specifically, the control features could be of an adaptable design.

Furthermore, the tempering circuit manifold may comprise a complementary manifold with a liquid main opening which empties into a manifold channel having one liquid distribution opening per liquid distribution opening of the control manifold, wherein each of the liquid distribution openings of the complementary manifold is preferably designed to be connected to one of the liquid distribution openings of the control manifold by a tempering loop pipe. This allows to merge the split flows at a desired place, where e.g. the inlet and /or return flow temperatures could be measured such that a temperature drop can be determined for the opened controlled tempering loop pipes for temperature control purposes.

The liquid distribution openings of the control manifold should each comprise a pipe connector. Optionally, in addition, the liquid distribution openings of the complementary manifold should each comprise a pipe connector. This allows an easy installation of the tempering loop pipes. Preferably, the pipe connectors are designed to directly receiving the tempering loop pipes, in particular, without further installed elements on the end of the tempering loop pipes. The pipe connectors may have a clamping element, a slide-on spigot and/or an inserting hole, and in addition an optional sealing ring. Further, the pipe connectors preferably have the same pipe receiving diameter, and even more preferably are of the same construction.

An addition according to the invention can be that the tempering circuit manifold comprises a controller comprising a first data interface to receive temperature request data, in particular of the different tempering loop pipes, a second data interface designed to receive temperature drop data, in particular of the different tempering loop pipes, a drive output interface connected to the single valve motor, and a controller unit designed to generate drive output data for the drive output interface to drive the valve assembly based on the temperature request data and the temperature drop data. The advantage of this is that you can easily tell when the colder liquid in the fed loop pipe will be replaced by new heated heating liquid, so you can at least temporarily switch to flooding another of the loop pipes. Or vice versa in a cooling appliance. This allows you to control the floods one at a time.

Specifically, the temperature drop data can be based on a temperature measurement in the control manifold, in particular in the liquid main opening or the distribution channel, with a first flow temperature sensor. This allows a precise detection of the temperature drop at the control manifold. The liquid temperature at the entry of the tempering loop pipe might be provided by the tempering liquid temperer (in particular a heater or cooler) itself. This means that only one temperature sensor is required, resulting in low cost and easy pre-installation.

Optionally, the temperature drop data can additionally be based on a temperature measurement in the complementary manifold, in particular in the liquid main opening or the manifold channel, with a second flow temperature sensor. With the optional first and a second temperature sensors and knowledge of the flow volumes the individual power consumption of the tempering loop pipe can be calculated. By assigning the tempering loop pipes to rooms, the individual power consumption per room can be calculated. This gives the user valuable information on the rooms energy usage.

Further, the temperature request data can be provided by thermostats, in particular electronic thermostats. The thermostats define whether a tempering request exists. It can be designed with an output signal that is a mere on/off-function.

Optionally, the single valve motor drives the valve assembly via a gear drive. This allows the motor to be positioned at a desired location, for example, to allow the manifold to be mounted flat against a wall. It also allows a smaller valve motor to be used and more precise controlling of the valve assembly. The gear drive can be a worm gear, whereas the control shaft may comprise or carry a toothed wheel of the worm gear.

In a preferred embodiment, the single valve motor is located in a static position, in particular relatively to the distribution channel, and in particular the single valve motor cannot move from liquid distribution opening to liquid distribution opening. The single valve motor is preferably positioned in the vicinity of one end of the distribution channel, even though this is no necessity.

The valve motor can be any kind of an actuator, in particular an automatic one, and in particular an electric one. In particular, the single valve motor can be a servo or a stepper motor. These motors provide power for small and precise angle changes. Separate measurements of reached valve assembly states can be avoided.

According to one functionality, the valve assembly should have for each controlled liquid distribution opening one condition which allows flow through this controlled liquid distribution opening, while the flow through the other of the controlled liquid distribution openings is blocked, in particular, there should be a set of control features designed to allow these conditions, e.g. a set of control features arranged spirally about the shaft axis. This allows feeding of the controlled liquid distribution openings one by one and e.g. to receive precise information about the temperature drop about the fed tempering loop pipe.

According to another functionality, the valve assembly should have a condition in which all controlled liquid distribution openings are blocked, in particular, there should be a set of control features designed to allow this condition, e.g. a tangential line at the control shaft that does not comprise a control feature. This condition allows to stop tempering completely in all tempering loop pipes connected to the controlled liquid distribution openings.

A further optional functionality can be that the valve assembly has a condition in which all controlled liquid distribution openings have flow, in particular, there should be a set of control features designed to allow this condition, e.g. a tangential line at the control shaft that comprises a control feature per controlled liquid distribution opening. In praxis, there are tempering requests for example after a low temperature phase in case of a vacation that require full heating capacity to heat up a house again. For example, when the majority or all controlled liquid outlets are requested to provide tempering liquid this condition can be used. Such a situation may also be detected by an untypical high temperature drop about the tempering loop pipes.

The invention further relates to a tempering system comprising a tempering liquid temperer (in particular a heater or cooler), a liquid pump and a tempering circuit manifold with a complementary manifold as defined ahead, wherein a temperer outlet of the tempering liquid temperer empties into the liquid main opening of the complementary manifold, and the liquid main opening of the control manifold empties into a temperer inlet of the tempering liquid temperer, wherein each of the liquid distribution openings of the complementary manifold is connected to one of the liquid distribution openings of the control manifold by a tempering loop pipe. The tempering system profits from the advantages of the tempering circuit manifold. The liquid pump should be arranged between liquid main opening of the complementary manifold and the liquid main opening of the control manifold on the side of the tempering liquid temperer, preferably between the tempering liquid temperer and the liquid main opening of the complementary manifold.

Additionally, the invention relates to a real estate, building or ship comprising a tempering system as defined ahead.

Further features, details and advantages of the invention are apparent from the wording of the claims and from the following description of embodiments with reference to the drawings. The figures depicting in:
- Fig. 1: a sketch of a tempering system with a tempering circuit manifold;
- Fig. 2: a perspective view of a tempering circuit manifold;
- Fig. 3: a longitudinal section through the tempering circuit manifold of Fig. 2;
- Fig. 4a: a longitudinal section through a tempering circuit manifold with a differently designed valve assembly;
- Fig. 4b: a detailed view of one end of the tempering circuit manifold of Fig. 4a;
- Fig. 5a: a perspective view of a tempering circuit manifold with a differently designed valve assembly;
- Fig. 5b: a longitudinal section through the tempering circuit manifold of Fig. 5a;
- Fig. 6: an exploded view of the control shaft and the valve elements of Fig. 5b in a first state; and
- Fig. 7: an exploded view of the control shaft and the valve elements of Fig. 5b in a second state.

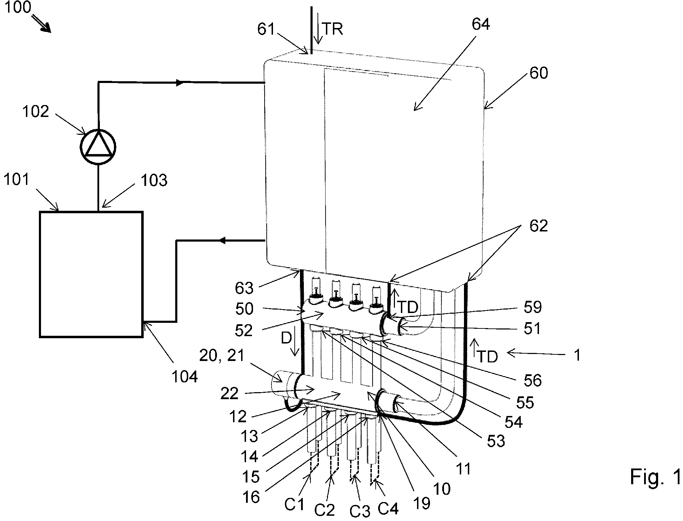

**Fig. 1** shows a tempering system 100 with a tempering circuit manifold 1, whereas the parts other than the tempering circuit manifold 1 are shown schematically. The tempering system 100 comprises a tempering liquid temperer 101 with a temperer outlet 103 and a temperer inlet 104, and a liquid pump 102 installed in the pipe of the temperer outlet 103.

The tempering circuit manifold 1 comprises a control manifold 10 and a complementary manifold 50, whereas the control manifold 10 has a liquid main opening 11 which empties into a distribution channel 12 having four separate liquid distribution openings 13, 14, 15, 16. The liquid distribution openings 13, 14, 15, 16 are each designed to be connected to a tempering loop pipe C1, C2, C3, C4.

The complementary manifold 50 has a liquid main opening 51 which empties into a manifold channel 52 having one liquid distribution opening 53, 54, 55, 56 per liquid distribution opening 13, 14, 15, 16 of the control manifold 10, wherein each of the liquid distribution openings 53, 54, 55, 56 of the complementary manifold 50 is designed to be connected to one of the liquid distribution openings 13, 14, 15, 16 of the control manifold 10 by a tempering loop pipe C1, C2, C3, C4. Fig. 1 shows the ends of connected tempering loop pipes C1, C2, C3, C4 and the rest of the loop schematically only. The liquid distribution openings 13, 14, 15, 16 of the control manifold 10 and the liquid distribution openings 53, 54, 55, 56 of the complementary manifold 50 each comprise a pipe connector to directly receive one end of the tempering loop pipes C1, C2, C3, C4. Each of the pipe connectors is of the same type of construction. In practice, the tempering loop pipes C1, C2, C3, C4 typically meander through the floor or wall of the room to be tempered. At the top of the complementary manifold 50 there are optical flow meters in sight glasses, one for each liquid distribution opening 53, 54, 55, 56. These flow meters may further constitute leakage valves/check valves that lock the distribution openings 53, 54, 55, 56 of the complementary manifold 50 automatically when there is no intended flow/differential pressure in the connected tempering loop pipe C1, C2, C3, C4. This avoids temperature based flow circulations through the distribution openings 53, 54, 55, 56 into the tempering loop pipes C1, C2, C3, C4 without liquid flow.

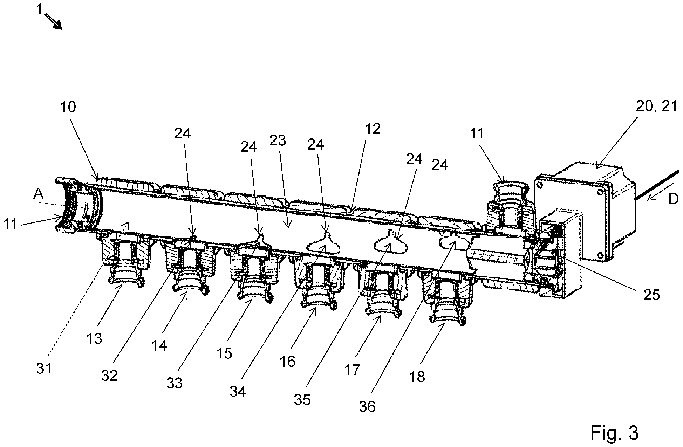

The tempering circuit manifold 1 further comprises a valve device 20 having a single valve motor 21 which drives a valve assembly (see reference 22 in Figs. 3 to 7) designed to control the flow rate through all of the liquid distribution openings 13, 14, 15, 16 so that they are all controlled liquid distribution openings 13, 14, 15, 16. All of these liquid distribution openings 13, 14, 15, 16, 17, 18 are arranged in a common layer, namely in a row and parallel to each other.

The temperer outlet 103 of the tempering liquid temperer 101 empties into the liquid main opening 51 of the complementary manifold 50, and the liquid main opening 11 of the control manifold 10 empties into the temperer inlet 104 of the tempering liquid temperer 101. This tempering system 100 may also be used with a negative or reverse flow, so that terminology referring to the direction of flow is not restricted to its literal meaning, although the flow direction is preferable a positive forward flow direction such that the literal meaning of the terminology is the preferred one.

A controller 60 has a first data interface 61 to receive temperature request data TR that are typically provided from the vicinity of the different tempering loop pipes C1, C2, C3, C4 and provided, for example, by thermostats located in the space of the different tempering loop pipes C1, C2, C3, C4. The controller 60 further has a second data interface 62 designed to receive temperature drop data TD of the different tempering loop pipes C1, C2, C3, C4, which are based on a measurement in the control manifold 10 with a first flow temperature sensor 19 and based on a measurement in the complementary manifold 50 with a second flow temperature sensor 59.

A drive output interface 63 of the controller 60 is connected to the single valve motor 21 and a controller unit 64 of the controller 60 designed to generate drive output data D for the drive output interface 63 to drive the valve assembly 22 based on the temperature request data TR and the temperature drop data TD with the valve motor 21.

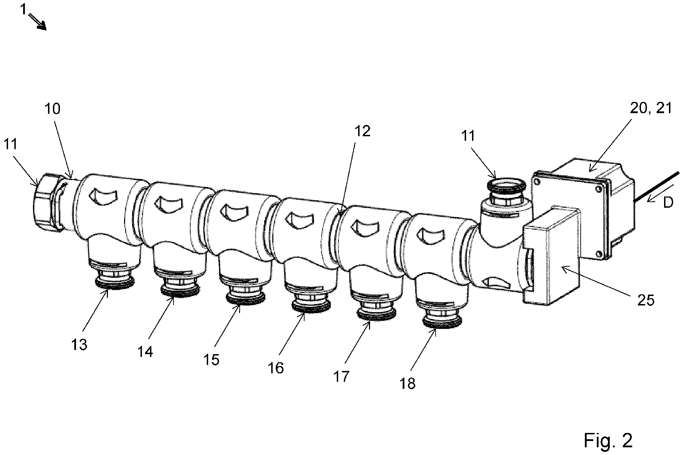

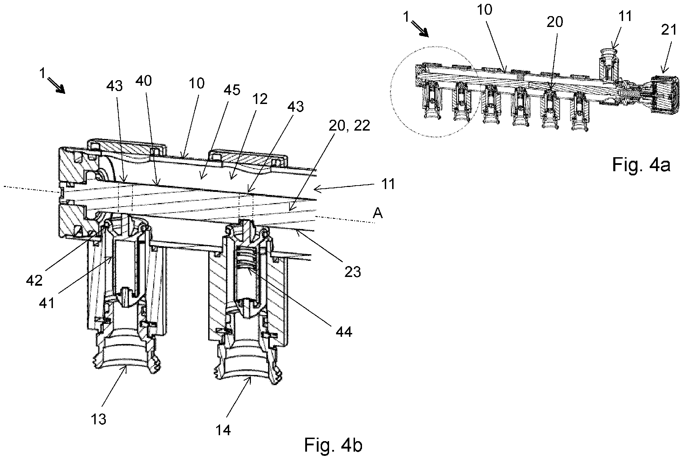

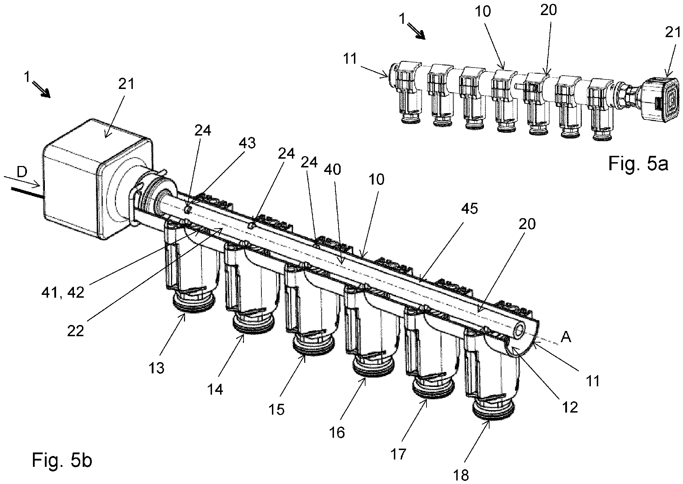

**Figs. 2 to 7** show three differing designs of the valve assembly 22 of a control manifold 10 of a tempering circuit manifold 1, whereby, in contrast to Fig. 1, they have up to six instead of four fluid outlets 13, 14, 15, 16, 17, 18. Figs. 2 and 3 show the first design, Fig. 4a/4b the second design and Figs. 5a/5b to 7 the third design. The control manifold 10 of Figs. 2 to 7 has a liquid main opening 11 which empties into a distribution channel 12 having at least two, in particular six separate liquid distribution openings 13, 14, 15, 16, 17, 18, which are designed to feed different tempering loop pipes (see references C1, C2, C3, C4 in Fig. 1; Fig. 4b only shows two of the liquid distribution openings 13, 14). It further comprises a valve device 20 having a single valve motor 21 that drives a valve assembly 22 designed to control the flow rate through all of the liquid distribution openings 13, 14, 15, 16, 17, 18 such that they are all controlled liquid distribution openings 13, 14, 15, 16, 17, 18.

According to Figs. 2 to 7 the valve assembly 22 comprises a control shaft 23 with a shaft axis A driven by the single valve motor 21 about the shaft axis A. The control shaft 23 comprises control features 24, wherein at least one control feature 24 is assigned to each of the controlled liquid distribution openings 13, 14, 15, 16, 17, 18 and designed to open the assigned controlled liquid distribution opening 13, 14, 15, 16, 17, 18 in dependence of a certain opening angle between 0 and 360 degree of the control shaft 23 about the shaft axis A. The shaft axis A extends along the control manifold 10 and is rotatable about the shaft axis A, wherein the controlled liquid distribution openings 13, 14, 15, 16, 17, 18 are arranged along the shaft axis A. As becomes apparent from Figs. 3 to 7, a set of the control features 24 are arranged at offset angles about the shaft axis A in a uniformly distributed way, in particular along a spiral path about the control shaft 23.

According to the embodiment of **Figs. 2** **and** **3** the single valve motor 21 drives the valve assembly 22 via a gear drive 25, that in particular is a worm gear. The third embodiment shown in **Figs. 5a/5b** to 7 has no such gear drive 25. Instead, the single valve motor 21 directly drives the control shaft 23. The shown part of the second embodiment **(****Fig. 4b****)** does not give information about the single valve motor 21, but it may be constructed with or without a gear drive 25, and in particular like the first or the third embodiment. As shown in Fig. 4a it has no gear drive and drives the control shaft 23 directly. Further, the first embodiment (Figs. 2 to 3) might optionally be constructed without a gear drive, too, and the second and third embodiment with a gear drive 25 like the first embodiment. In any event, the single valve motor 21 should be a servo or a stepper motor to precisely turn the control shaft 23 into desired angles about the shaft axis A. The single valve motor 21 should be located in a static position and is preferably located at one end of the distribution channel 12.

Within the first embodiment of **Figs. 2** **and** **3****,** the control shaft 23 builds a single closure element that selectively locks and opens the liquid flow through the controlled liquid distribution openings 13, 14, 15, 16, 17, 18 in dependence of a specific opening angle between 0 and 360 degree of the control shaft 23 about the shaft axis. The control shaft 23 is hollow and has a tube wall 30 that extends along the shaft axis A, wherein the hollow control shaft 23 is mounted within the distribution channel 12. The liquid main opening 11 empties into the hollow control shaft 23 and the controlled liquid distribution openings 13, 14, 15, 16, 17, 18 are arranged on the circumference of the tube wall 30. The control features 24 are built by valve openings 31, 32, 33, 34, 35, 36 that are formed in the tube wall 30 that correspond with the controlled liquid distribution openings 13, 14, 15, 16, 17, 18 in dependence of a specific opening angle between 0 and 360 degree of the control shaft 23 about the shaft axis A by an overlap of the valve opening 31, 32, 33, 34, 35, 36 and the corresponding controlled liquid outlet 13, 14, 15, 16, 17, 18. The reference to the valve opening 31 only refers to its position, as the valve opening 31 itself is in a hidden rear position. In the vicinity of the gear drive 25, a second liquid main opening 11 is shown such that the liquid main opening 11 to be used can be selected at installation. The non-used of the opening liquid main openings 11 can be connected to another controlled manifold or simply closed by a closure element.

Contrary to this, the control shaft 23 of the second and third embodiment of **Figs. 4a/4b to 7** has an outer surface 40 that extends along the shaft axis A, wherein the control shaft 23 is mounted inside the distribution channel 12 (in further potential embodiments it could also be mounted outside along the distribution channel 12). The liquid main opening 11 empties into an annular space 45 around the control shaft 23 in the distribution channel 12, and the controlled liquid distribution openings 13, 14, 15, 16, 17, 18 are arranged at the circumference of said annular space 45.

The controlled liquid distribution openings 13, 14, 15, 16, 17, 18 each comprise a valve element 41 which rests in a valve seat 42, wherein the outer surface 40 forms the control features 24 in such a way that the valve elements 41 are mechanically linked to the outer surface 40 of the control shaft 23 and are moved into an opening position in the valve seat 42 in dependence of a specific opening angle of the control shaft 23 between 0 and 360 degrees about the shaft axis A. The movement of the valve element 41 is in particular linear in the valve seat 42 and orthogonal to the shaft axis A. Each of the valve elements 41 is urged into the direction of a locking state in its valve seat 42 by a spring 44 and the control shaft 23 acts against the spring 44 to move the valve element 41 into an opening position.

In both of the second (Fig. 4a/4b) and third embodiment (Figs. 5a/5b to 7, the outer surface 40 builds circumferential control curves 43 for each of the valve elements 41 to move them individually. Within the second embodiment (Fig. 4a/4b) the outer surface 40 comprises a cylindrical base shape and the control features 24 are local holes, whereas the control features 24 are local peaks at the cylindrical base shape in the third embodiment (Figs. 5a/5b to 7). Therefore, the circumferential control curves 43 consist of cylindrical sections and the local holes or peaks.

According to the third embodiment (Figs. 5a/5b to 7), the local peaks have an arc shape that has a smaller radius than the cylindrical base shape. This allows smooth sliding about the valve elements 41 and partial opening of the controlled liquid distribution openings 13, 14, 15, 16, 17, 18.

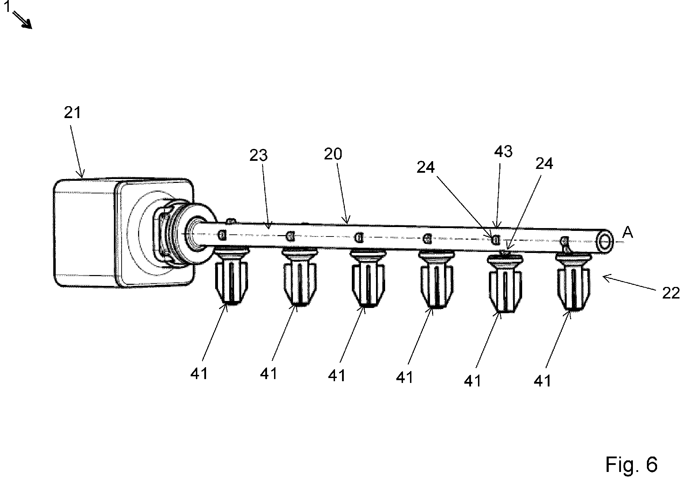

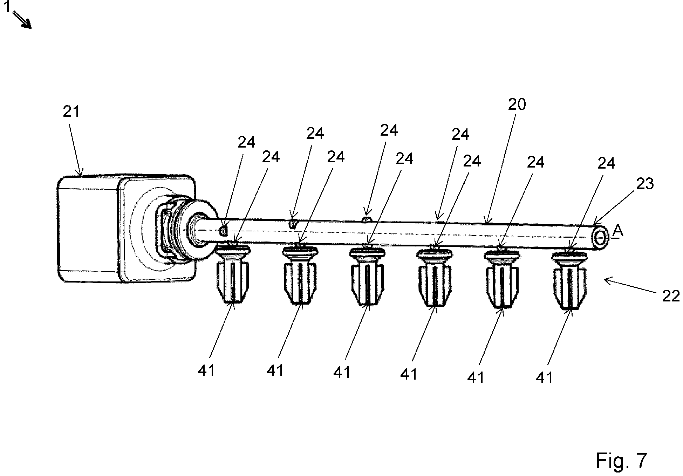

In addition to the spirally arranged control features 24 of the third embodiment, it can be seen that there is one tangential line on the control shaft 23 which has no control feature 24 and one tangential line which has a control feature 24 for each controlled liquid outlet 13, 14, 15, 16, 17, 18. The spirally arranged set of control features 24 permits an angular condition of the control shaft 23 for each controlled liquid outlet 13, 14, 15, 16, 17, 18 in which flow is permitted for only one of the controlled liquid distribution openings 13, 14, 15, 16, 17, 18 while the flow through the other of the controlled liquid distribution openings 13, 14, 15, 16, 17, 18 is blocked (see Fig. 6). The tangential line having no control feature 24 for the controlled liquid outlets 13, 14, 15, 16, 17, 18 at all allows an angular condition of the control shaft 23 in which all the controlled liquid distribution openings 13, 14, 15, 16, 17, 18 are blocked. Conversely, the tangential line having a control feature 24 for each controlled liquid outlet 13, 14, 15, 16, 17, 18 allows an angular condition of the control shaft 23 in which all controlled liquid distribution openings 13, 14, 15, 16, 17, 18 have flow, because the valve elements 41 are all moved to an open condition in the valve seat 42 (see Fig. 7).

The invention is not limited to one of the embodiments described above, but can be modified in a variety of ways.

For example, the number of liquid distribution openings 13, 14, 15, 16, 17, 18 can be varied, preferably between two and ten. Further, the control shaft 23 could be arranged outside along the distribution channel 12. In such case, the valve elements 41 could protrude through sealed openings out of the distribution channel 12 into the direction of the control shaft 23, in particular to interact with the control shaft 23 outside the distribution channel 12. Furthermore, two or more control manifolds 10 and/or complementary manifolds 50 could be connected in a row, either by a connecting pipe bend or by a linear connection.

All the features and advantages resulting from the claims, the description and the drawing, including design details, spatial arrangements and process steps, can be essential to the invention both individually and in a wide variety of combinations.

**List of reference signs**

| | | | |
|---|---|---|---|
| 1 | tempering circuit manifold | 50 | complementary manifold |
| | | 51 | liquid main opening |
| 10 | control manifold | 52 | manifold channel |
| 11 | liquid main opening | 53-56 | liquid distribution openings |
| 12 | distribution channel | 59 | second flow temperature sensor |
| 13-18 | liquid distribution openings | | |
| 19 | first flow temperature sensor | 60 | controller |
| | | 61 | first data interface |
| 20 | valve device | 62 | second data interface |
| 21 | valve motor | 63 | drive output interface |
| 22 | valve assembly | 64 | controller unit |
| 23 | control shaft | | |
| 24 | control feature | 100 | tempering system |
| 25 | gear drive | 101 | tempering liquid temperer |
| | | 102 | liquid pump |
| 30 | tube wall | 103 | temperer outlet |
| 31-36 | valve openings | 104 | temperer inlet |
| 40 | outer surface | A | shaft axis |
| 41 | valve element | C1-C4 | tempering loop pipes |
| 42 | valve seat | D | drive output data |
| 43 | control curve | TD | temperature drop data |
| 44 | spring | TR | temperature request data |
| 45 | annular space | | |

## Claims

1. **Tempering circuit manifold** (1) for a building tempering system comprising:
- a control manifold (10) with a liquid main opening (11) which empties into a distribution channel (12) having at least two separate liquid distribution openings (13, 14, 15, 16, 17, 18), wherein the liquid distribution openings (13, 14, 15, 16, 17, 18) are designed in particular to be connected to different tempering loop pipes (C1, C2, C3, C4);
- a valve device (20) having a single valve motor (21) that drives a valve assembly (22) designed to control the flow rate through at least two of the liquid distribution openings (13, 14, 15, 16, 17, 18) being controlled liquid distribution openings (13, 14, 15, 16, 17, 18).

2. The tempering circuit manifold (1) according to claim 1,
- wherein the valve assembly (22) comprises a control shaft (23) with a shaft axis (A) driven by the single valve motor (21) about the shaft axis (A),
- wherein the control shaft (23) comprises control features (24),
- wherein at least one control feature (24) is assigned to each of the controlled liquid distribution openings (13, 14, 15, 16, 17, 18) and designed to open the assigned controlled liquid distribution opening (13, 14, 15, 16, 17, 18) in dependence of a certain opening angle between 0 and 360 degree of the control shaft (23) about the shaft axis (A).

3. The tempering circuit manifold (1) according to claim 2,
- wherein the shaft axis (A) extends along the control manifold (10) so as to be rotatable about the shaft axis (A),
- wherein the controlled liquid distribution openings (13, 14, 15, 16, 17, 18) being arranged along the shaft axis (A).

4. The tempering circuit manifold (1) according to one of claims 2 or 3, wherein the control features (24) are arranged at offset angles about the shaft axis (A).

5. The tempering circuit manifold (1) according to one of claims 2 to 4, wherein the control shaft (23) builds a single closure element that selectively locks or opens the liquid flow through the controlled liquid distribution openings (13, 14, 15, 16, 17, 18) in dependence of a specific opening angle between 0 and 360 degree of the control shaft about the shaft axis.

6. The tempering circuit manifold (1) according to one of claims 2 to 5, wherein the control shaft (23) is hollow and has a tube wall (30) that extends along the shaft axis (A), wherein the hollow control shaft (23) is mounted within the distribution channel (12), wherein the liquid main opening (11) empties into the hollow control shaft (23), wherein the controlled liquid distribution openings (13, 14, 15, 16, 17, 18) being arranged on the circumference of the tube wall (30), wherein the control features (24) are built by valve openings (31, 32, 33, 34, 35, 36) that are formed in the tube wall (30) that correspond with the controlled liquid distribution openings (13, 14, 15, 16, 17, 18) in dependence of a specific opening angle between 0 and 360 degree of the control shaft (23) about the shaft axis (A).

7. The tempering circuit manifold (1) according to one of claims 2 to 4, wherein the control shaft (23) has an outer surface (40) that extends along the shaft axis (A), wherein the control shaft (23) is mounted inside or outside along the distribution channel (12), wherein the controlled liquid distribution openings (13, 14, 15, 16, 17, 18) each comprise a valve element (41) which rests in a valve seat (42), wherein the outer surface (40) forms the control features (24) in such a way that the valve elements (41) are mechanically linked to the outer surface (40) of the control shaft (23) and are moved into an opening position in the valve seat (42) in dependence of a specific opening angle of the control shaft (23) between 0 and 360 degrees about the shaft axis (A).

8. The tempering circuit manifold (1) according to claim 7, wherein the outer surface (40) builds circumferential control curves (43) for each of the valve elements (41).

9. The tempering circuit manifold (1) according to of the claims 7 or 8, wherein the outer surface (40) comprises a cylindrical base shape and the control features (24) are local holes and/or local peaks at the cylindrical base shape.

10. The tempering circuit manifold (1) according to one of claims 7 to 9, wherein, when the control shaft (23) is mounted within the distribution channel (12), the liquid main opening (11) empties into an annular space (45) around the control shaft (23) in the distribution channel (12), and the controlled liquid distribution openings (13, 14, 15, 16, 17, 18) are arranged at the circumference of the annular space (45).

11. The tempering circuit manifold (1) according to one of the previous claims, comprising a controller (60) comprising:
- a first data interface (61) to receive temperature request data (TR); and
- a second data interface (62) designed to receive temperature drop data (TD); and
- a drive output interface (63) connected to the single valve motor (21); and
- a controller unit (64) designed to generate drive output data (D) for the drive output interface (63) to drive the valve assembly (22) based on the temperature request data (TR) and the temperature drop data (TD).

12. The tempering circuit manifold (1) according to one of the previous claims, wherein the single valve motor (21) drives the valve assembly (22) via a gear drive (25).

13. The tempering circuit manifold (1) according to one of the previous claims, wherein the single valve motor (21) is located in a static position, in particular relatively to the distribution channel (12), and in particular the single valve motor (21) cannot move from liquid distribution opening (13, 14, 15, 16, 17, 18) to liquid distribution opening (13, 14, 15, 16, 17, 18).

14. The tempering circuit manifold (1) according to one of the previous claims, wherein the valve assembly (22) has for each controlled liquid distribution opening (13, 14, 15, 16, 17, 18) one condition which allows flow through this controlled liquid distribution opening (13, 14, 15, 16, 17, 18), while the flow through the other of the controlled liquid distribution openings (13, 14, 15, 16, 17, 18) is blocked.

15. The tempering circuit manifold (1) according to one of the previous claims, wherein the valve assembly (22) has a condition in which all controlled liquid distribution openings (13, 14, 15, 16, 17, 18) are blocked.

16. The tempering circuit manifold (1) according to one of the previous claims, wherein the valve assembly (22) has a condition in which all controlled liquid distribution openings (13, 14, 15, 16, 17, 18) have flow.

17. The tempering circuit manifold (1) according to one of the previous claims, comprising a complementary manifold (50) with a liquid main opening (51) which empties into a manifold channel (52) having one liquid distribution opening (53, 54, 55, 56) per distribution opening (13, 14, 15, 16, 17, 18) of the control manifold (10).

18. Tempering system (100) comprising a tempering liquid temperer (101), a liquid pump (102) and a tempering circuit manifold (1) according to claim 17, wherein a temperer outlet (103) of the tempering liquid temperer (101) empties into the liquid main opening (51) of the complementary manifold (50), and the liquid main opening (11) of the control manifold (10) empties into a temperer inlet (104) of the tempering liquid temperer (101), wherein each of the liquid distribution openings (53, 54, 55, 56) of the complementary manifold (50) is connected to one of the liquid distribution openings (13, 14, 15, 16, 17, 18) of the control manifold (10) by a tempering loop pipe (C1, C2, C3, C4).
